# EUROPÄISCHE PATENTANMELDUNG

(11) **EP 2 312 223 A2**
(43) Veröffentlichungstag der Anmeldung: **20.04.2011**
(21) Anmeldenummer: 10180068.8
(22) Anmeldetag: 27.09.2010
(51) Int. Cl.: F24D 3/08, F24D 11/00

(54) **Heizungs- und/oder Warmwasserbereitungssystem**

(30) Priorität: 01.10.2009 DE 202009013236 U
(71) Anmelder: Robert Bosch GmbH, 70442 Stuttgart (DE)
(72) Erfinder: Andres, Alvaro, 72622 Nuertingen (DE); Lustig, Konrad, 70197 Stuttgart (DE)

(57) **Zusammenfassung**

Die Erfindung betrifft ein Heizungs- und/oder Warmwasserbereitungssystem bestehend aus einem Heizgerät mit einer Brennereinheit, mindestens einem daran angeschlossenen Heizkreislauf zu einem Wärmeverbraucher, einem daran über einen Wärmeübertrager angeschlossenen Warmwasserkreislauf, wobei ein Ventil zur Umschaltung zwischen Heizungs- und Warmwasserbereitungsbetrieb vorgesehen ist, einer über Vor- und Rücklaufleitungen angebundenen weiteren Wärmequelle oder einem insbesondere solar beheizten Pufferspeicher, sowie einer vor der Brennereinheit in der Rücklaufleitung angeordneten Pumpe.

Der Neuerung liegt daher die Aufgabe zu Grunde, die Einbindung von weiteren, insbesondere regenerativen Wärmequellen in ein Heizungs- und/oder Warmwasserbereitungssystem zu vereinfachen und die Kombination mit fossil befeuerten Heizgeräten zu optimieren.

Das Heizungs- und/oder Warmwasserbereitungssystem ist **dadurch gekennzeichnet, dass** in der Vorlaufleitung ein Vierwege-Mischventil angeordnet ist, um damit einen gemischten, ungemischten oder gedrosselten Heizbetrieb und/oder Warmwasserbereitungsbetrieb unter Umgehung oder mindestens teilweisen Einbeziehung der weiteren Wärmequelle oder des Pufferspeichers durchzuführen. Dazu steht das Vierwege-Mischventil in der Vorlaufleitung mit seinen vier Anschlüssen mit der aus dem Heizgerät kommenden Vorlaufleitung, mit der in den Heizkreislauf führenden Vorlauflaufleitung, mit der von einer weiteren Wärmequelle oder vom Pufferspeicher kommenden Vorlaufleitung sowie der in den Wärmeübertrager einmündenden Vorlaufleitung in Verbindung. Vor der Brennereinheit mündet eine in die weitere Wärmequelle oder den Pufferspeicher führende Rücklaufleitung aus.

## Beschreibung

Die Erfindung betrifft ein Heizungs- und/oder Warmwasserbereitungssystem nach dem Oberbegriff des Schutzanspruches 1.

Gattungsgemäße Heizungs- und/oder Warmwasserbereitungssysteme bestehen in der Regel aus einem Heizgerät mit einer Brennereinheit, mindestens einem daran angeschlossenen Heizkreislauf zu einem Wärmeverbraucher und einem daran über einen Wärmeübertrager angeschlossenen Warmwasserkreislauf.

Bei diesen so genannten Kombiheizgeräten erfolgt die Warmwasserbereitung zumeist im direkten Durchflussprinzip. Dabei wird im so genannten primären Wärmeübertrager durch die Brennereinheit das Wasser im Primärkreis, also das Heizwasser, erwärmt. Im Falle einer Trink-Warmwasserzapfung fördert eine Pumpe das erwärmte Heizwasser zu dem sogenannten sekundären Wärmeübertrager. Dort gibt es die Energie im Durchfluss durch den Wärmeübertrager im Gegenstrom an das Trinkwasser ab.

Dabei ist üblicherweise ein Umschaltventil zwischen Heizungs- und Warmwasserbereitungsbetrieb vorgesehen. Eine Pumpe befindet sich zwischen dem Umschaltventil und der Brennereinheit in der Rücklaufleitung. Jeweils über Vor- und Rücklaufleitungen kann eine weitere Wärmequelle, beispielsweise eine Fernwärmeübergabestation, oder ein insbesondere solar beheizter Pufferspeicher in das System eingebunden sein. Derartige solar beheizte Pufferspeicher dienen zur Vorwärmung des Heizwassers. Damit gelangt vorgewärmtes Heizwasser mit Temperaturen von bis zu 90 °C heizwasserseitig an den sekundären Wärmeübertrager. Diese relativ hohen Temperaturen können an Bauteilen des Systems möglicherweise zu Problemen führen. Daher muss eine Temperaturbegrenzung vorausgeschaltet werden.

Wird bei bekannten Heizungs- und/oder Warmwasserbereitungssystemen Trinkwasser als Wärmespeichermedium benutzt, so muss in regelmäßigen Abständen für eine thermische Desinfektion gesorgt werden, um eine mögliche Keimbildung sicher zu unterbinden.

Der Neuerung liegt daher die Aufgabe zu Grunde, die Einbindung von weiteren, insbesondere regenerativen Wärmequellen in ein Heizungs- und/oder Warmwasserbereitungssystem zu vereinfachen und die Kombination mit fossil befeuerten Heizgeräten zu optimieren.

Neuerungsgemäß wird dies mit den Merkmalen des Schutzanspruches 1 gelöst. Vorteilhafte Weiterbildungen sind den Unteransprüchen zu entnehmen.

Das Heizungs- und/oder Warmwasserbereitungssystem ist **dadurch gekennzeichnet, dass** in der Vorlaufleitung ein Vierwege-Mischventil angeordnet ist, um damit einen gemischten, ungemischten oder gedrosselten Heizbetrieb und/oder Warmwasserbereitungsbetrieb unter Umgehung oder mindestens teilweisen Einbeziehung der weiteren Wärmequelle oder des Pufferspeichers durchzuführen. Dazu steht das Vierwege-Mischventil in der Vorlaufleitung mit seinen vier Anschlüssen mit der aus dem Heizgerät kommenden Vorlaufleitung, mit der in den Heizkreislauf führenden Vorlauflaufleitung, mit der von einer weiteren Wärmequelle oder vom Pufferspeicher kommenden Vorlaufleitung sowie der in den Wärmeübertrager einmündenden Vorlaufleitung in Verbindung. Vor der Brennereinheit mündet eine in die weitere Wärmequelle oder den Pufferspeicher führende Rücklaufleitung aus.

Das Vierwege-Mischventil ist vorteilhafterweise eine Kombination aus Umsteuer- und Drosselventil. Es wird über ein allgemein bekanntes Schrittmotorsignal angesteuert, um die Regelgeschwindigkeit und die erforderliche Regelgenauigkeit einzuhalten.

Am Vierwege-Mischventil erfolgt die Freigabe des Massenstroms über die weitere Wärmequelle oder durch den Pufferspeicher, wenn die Temperatur am Austritt des Wärmeübertragers und/oder in der Rücklaufleitung zum Heizgerät unter die Vorlauftemperatur der weiteren Wärmequelle oder die Temperatur im oberen Bereich des Pufferspeichers fällt.

Genauso wird die weitere Wärmequelle oder der Pufferspeicher mindestens mit einem Teilstrom als Bypass durchströmt und das Vierwege-Mischventil öffnet für mindestens einen Teilstrom zur weiteren Wärmequelle oder zum Pufferspeicher, wenn sich das System im Heizbetrieb befindet und die Temperatur am Austritt des Wärmeübertragers und/oder in der Rücklaufleitung zum Heizgerät unter die Vorlauftemperatur der weiteren Wärmequelle oder unter die Temperatur im oberen Bereich des Pufferspeichers fällt.

Weiterhin wird die weitere Wärmequelle oder der Pufferspeicher erst als Bypass mit mindestens einem Teilstrom durchströmt und es öffnet das Vierwege-Mischventil für mindestens einen Teilstrom zur weiteren Wärmequelle oder zum Pufferspeicher, wenn sich das System im Warmwasserbereitungsbetrieb befindet und die Temperatur in der Rücklaufleitung am Eintritt in die Brennereinheit unter die Temperatur am Austritt des Wärmeübertragers, wahlweise unter Berücksichtigung einer vorgebbaren Schalthysterese, fällt.

Das Vierwege-Mischventil dient als Mischventil, wenn die Vorlauftemperatur der weiteren Wärmequelle oder die Temperatur im Pufferspeicher höher als ein vorgebbarer Sollwert ist. Als Vierwege-Mischventil ist ein Radialventil oder ein Linearventil mit Drosselfunktion vorgesehen. Außerdem besitzt das Vierwege-Mischventil in einer bevorzugten Ausführungsform als Radialventil einen erweiterten Drehbereich des Ventilkükens, um als Drosselventil zu wirken. Entsprechend dazu besitzt es als Linearventil einen erweiterten Bereich des Ventilschiebers, um in diesem Bereich als Drosselventil zu wirken Diese Drosselwirkung ist besonders für den Warmwasserbereitungsbetrieb relevant, da die Modulation der Pumpenförderleistung für sich alleine nach unten hin relativ begrenzt ist.

Mit der Neuerung steht ein einfaches Heizungs- und/oder Warmwasserbereitungssystem zur Verfügung, mit dem die Einbindung von weiteren, insbesondere regenerativen Wärmequellen in ein Heizungs- und/oder Warmwasserbereitungssystem vereinfacht und die Kombination mit fossil befeuerten Heizgeräten optimiert wird. Insbesondere in Verbindung mit einem solar beheizten Pufferspeicher wird die Warmwasserbereitung im Durchfluss optimiert. Insgesamt ist der Systemaufbau einfach, denn die gesamte Systemtechnik kommt erfindungsgemäß mit einer geringen Anzahl an Bauteilen und Sensoren aus. Dadurch wird eine hohe Robustheit erreicht.

Die neuerungsgemäße Anlagentechnik bietet gegenüber dem Stand der Technik den Vorteil, dass das Heizgerät nicht mehr mit Wärme aus der weiteren Wärmequelle oder dem Pufferspeicher beaufschlagt wird, wenn diese alleine für das Decken der Wärmeanforderung ausreicht. Dadurch werden Wärmeverluste im Bereich des Heizgerätes ausgeschlossen.

Weiterhin ist an der neuerungsgemäßen Anlagentechnik vorteilhaft, dass über Vor- und Rücklaufleitungen der weiteren Wärmequelle oder des Pufferspeichers als Schnittstelle viele verschiedene Wärmequellen integriert werden können, ohne dass am Heizgerät hydraulische sowie regeltechnische Einstellungen vorgenommen werden müssen. Die Temperaturschwelle zum Eintrag von Wärme in den Pufferspeicher wird tief gehalten, so dass alle angeschlossenen Wärmequellen mit einem relativ niedrigen Temperaturniveau starten können und dass die Speicherkapazität gut ausgenutzt wird.

Zudem kann aufgrund der Verwendung eines elektronisch geregelten Mischventils einerseits die Verbrühung an zu heißem Warmwasser bei hoher Temperatur im Pufferspeicher verhindert werden und andererseits kann auch auf den bisher üblichen Mischer im Heizkreis verzichtet werden, da auch im Heizbetrieb beliebige Temperaturen über den Mischer eingestellt werden können.

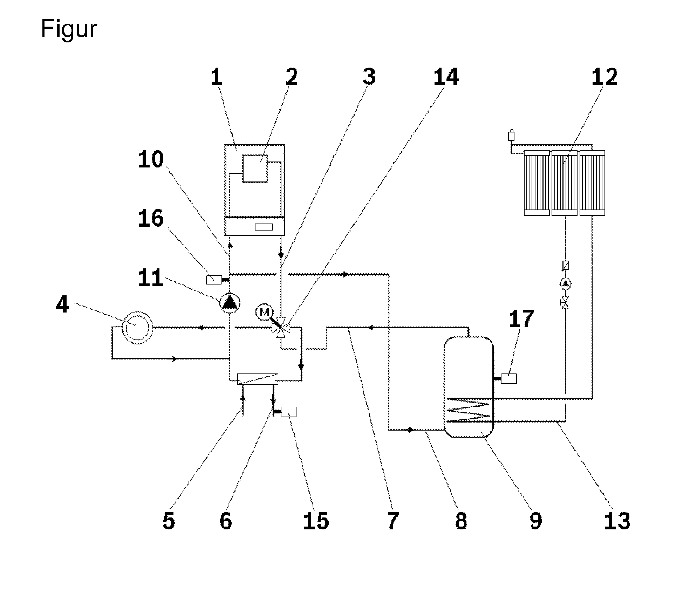

Die Zeichnung stellt ein Ausführungsbeispiel der Neuerung dar und zeigt in einer einzigen Figur den schematischen Aufbau eines Heizungs- und/oder Warmwasserbereitungssystems.

Das Heizungs- und/oder Warmwasserbereitungssystem, besteht im Wesentlichen aus einem Heizgerät 1 mit einer Brennereinheit 2, einer Vorlaufleitung 3, mindestens einem daran angeschlossenen Heizkreislauf 4 zum einem Wärmeverbraucher, einem daran über einen Wärmeübertrager 5 angeschlossenen Warmwasserkreislauf 6, einem über Vor- und Rücklaufleitungen 7, 8 angebundenen Pufferspeicher 9 sowie einer vor der Brennereinheit 2 in der Rücklaufleitung 10 angeordneten Pumpe 11. Beheizt wird der Pufferspeicher 9 über eine Solaranlage, welche im Wesentlichen aus einem über Sonnenkollektoren 12 geführten Solarkreislauf 13 besteht.

In der von der Brennereinheit 2 kommenden Vorlaufleitung 3 ist ein Vierwege-Mischventil 14 angeordnet, um damit einen gemischten, ungemischten oder gedrosselten Heizbetrieb und/oder Warmwasserbereitungsbetrieb unter Umgehung oder mindestens einer teilweisen Einbeziehung des Pufferspeichers 9 durchzuführen. Verbunden ist das Vierwege-Mischventil 14 mit seinen vier Anschlüssen mit der aus dem Heizgerät 1 kommenden Vorlaufleitung 3, mit der in den Heizkreislauf 4 führenden Vorlauflaufleitung, mit der von einer weiteren Wärmequelle oder vom Pufferspeicher kommenden Vorlaufleitung 7 sowie der in den Wärmeübertrager einmündenden Vorlaufleitung.

Am Vierwege-Mischventil 14 erfolgt die Freigabe der Strömung durch den Pufferspeicher 9, wenn die Temperatur am Temperaturfühler 15 am Austritt des Wärmeübertragers 5 und/oder am Temperaturfühler 16 in der Rücklaufleitung 10 unter die Temperatur im oberen Bereich des Pufferspeichers 9, welche mit dem Temperaturfühler 17 detektiert wird, fällt. Der Pufferspeicher 9 wird mindestens mit einem Teilstrom als Bypass durchströmt und das Vierwege-Mischventil 14 öffnet für mindestens einen Teilstrom zum Pufferspeicher 9, wenn sich das System im Heizbetrieb befindet und dabei die Temperatur am Temperaturfühler 15 und/oder am Temperaturfühler 16 in der Rücklaufleitung 10 unter die Temperatur am Temperaturfühler 17 im Pufferspeicher 9 fällt.

Wenn sich allerdings das System im Warmwasserbereitungsbetrieb befindet und die am Temperaturfühler 16 erfasste Temperatur in der Rücklaufleitung 10 am Eintritt in die Brennereinheit 2 unter die mit dem Temperaturfühler 15 erfasste Temperatur am Austritt des Wärmeübertragers 5 fällt, wird der Pufferspeicher 8 als Bypass mit mindestens einem Teilstrom durchströmt und das Vierwege-Mischventil 14 öffnet für mindestens einen Teilstrom zum Pufferspeicher 9. Das Vierwege-Mischventil 14 dient als Mischventil, wenn die Temperatur am Temperaturfühler 17 im Pufferspeicher 9 höher als ein vorgebbarer Sollwert ist. Dabei wird die einzuregelnde Warmwassertemperatur am Temperaturfühler 15 erfasst.

## Patentansprüche

1. Heizungs- und/oder Warmwasserbereitungssystem, bestehend aus einem Heizgerät (1) mit einer Brennereinheit (2), mindestens einem daran angeschlossenen Heizkreislauf (3) zu einem Wärmeverbraucher, einem daran über einen Wärmeübertrager (4) angeschlossenen Warmwasserkreislauf (5), wobei ein Ventil zur Umschaltung zwischen Heizungs- und Warmwasserbereitungsbetrieb vorgesehen ist, einer über Vor- und Rücklaufleitungen (6, 7) angebundenen weiteren Wärmequelle oder einem insbesondere solar beheizten Pufferspeicher (8), sowie einer vor der Brennereinheit (2) in der Rücklaufleitung (9) angeordneten Pumpe (10),
**dadurch gekennzeichnet, dass** in der Vorlaufleitung ein Vierwege-Mischventil angeordnet ist, um damit einen gemischten, ungemischten oder gedrosselten Heizbetrieb und/oder Warmwasserbereitungsbetrieb unter Umgehung oder mindestens teilweisen Einbeziehung der weiteren Wärmequelle oder des Pufferspeichers durchzuführen, dass das Vierwege-Mischventil in der Vorlaufleitung mit seinen vier Anschlüssen mit der aus dem Heizgerät kommenden Vorlaufleitung, mit der in den Heizkreislauf führenden Vorlauflaufleitung, mit der von einer weiteren Wärmequelle oder vom Pufferspeicher kommenden Vorlaufleitung sowie der in den Wärmeübertrager einmündenden Vorlaufleitung in Verbindung steht, und dass vor der Brennereinheit eine in die weitere Wärmequelle oder den Pufferspeicher führende Rücklaufleitung ausmündet.

2. Heizungs- und/oder Warmwasserbereitungssystem nach Anspruch 1,
**dadurch gekennzeichnet, dass** das Vierwege-Mischventil eine Kombination aus Umsteuer-und Drosselventil ist.

3. Heizungs- und/oder Warmwasserbereitungssystem nach Anspruch 1 oder 2,
**dadurch gekennzeichnet, dass** ein Schrittmotor das Vierwege-Mischventil ansteuert.

4. Heizungs- und/oder Warmwasserbereitungssystem nach einem der Ansprüche 1 bis 3,
**dadurch gekennzeichnet, dass** als Vierwege-Mischventil ein Radialventil oder ein Linearventil mit Drosselfunktion vorgesehen ist.

5. Heizungs- und/oder Warmwasserbereitungssystem nach einem der Ansprüche 1 bis 4,
**dadurch gekennzeichnet, dass** das Vierwege-Mischventil in Ausbildung als Radialventil einen erweiterten Drehbereich des Ventilkükens besitzt, damit es in diesem Bereich als Drosselventil wirkt.

6. Heizungs- und/oder Warmwasserbereitungssystem nach einem der Ansprüche 1 bis 4,
**dadurch gekennzeichnet, dass** das Vierwege-Mischventil in Ausbildung als Linearventil einen erweiterten Bereich des Ventilschiebers besitzt, damit es in diesem Bereich als Drosselventil wirkt.
